Europäisches Patentamt

European Patent Office

Office européen des brevets

(19)

(11) Veröffentlichungsnummer: **0 297 484 B1**

(12) **EUROPÄISCHE PATENTSCHRIFT**

(45) Veröffentlichungstag der Patentschrift: **26.08.92**

(21) Anmeldenummer: **88110221.4**

(22) Anmeldetag: **27.06.88**

(51) Int. Cl.⁵: **H02G 1/12**

(54) **Anordnung für Abschneide-und/oder Abisoliervorrichtungen.**

(30) Priorität: **30.06.87 CH 2494/87**

(43) Veröffentlichungstag der Anmeldung:
**04.01.89 Patentblatt 89/01**

(45) Bekanntmachung des Hinweises auf die
Patenterteilung:
**26.08.92 Patentblatt 92/35**

(84) Benannte Vertragsstaaten:
**CH DE FR GB LI**

(56) Entgegenhaltungen:
**EP-A- 0 195 932      FR-A- 2 282 179**
**GB-A- 521 433      GB-A- 2 063 580**
**US-A- 1 597 460      US-A- 4 327 609**

(73) Patentinhaber: **Stepan, Jiri**
**St. Gallerstrasse 76**
**7320 Sargans(CH)**

(72) Erfinder: **Stepan, Jiri**
**St. Gallerstrasse 76**
**7320 Sargans(CH)**

(74) Vertreter: **Büchel, Kurt F., Dr.**
**Bergstrasse 297**
**FL-9495 Triesen(LI)**

## Beschreibung

Die Erfindung betrifft eine Anordnung nach dem Oberbegriff des Anspruches 1, bzw. nach den Oberbegriffen dez Ansprüche 2 und 3. Unter Linie im Sinne der Erfindung ist auch eine gekrümmte Linie zu verstehen. Eine solche Anordnung wird z.B. beim Abisolieren von Drähten verwendet.

Dementsprechend ausgebildete Anordnungen gibt es in den verschiedensten Ausführungsformen: Die DE-OS 2122675 zeigt vier Messerbacken, von denen zwei Messerbacken in einer Ebene, die beiden anderen Messerbacken in einer dazu parellelen Ebene jeweils einander gegenüber liegen. Zwischen diesen vier Messerbacken ist daher eine rechteckige Fläche gebildet, die von Schneiden umgeben ist. Durch das Auseinanderschieben der jeweils einander gegenüberliegenden Messerbacken wird dieses Rechteck vergrössert. Durch ein Zusammenschieben der Messer wird das Rechteck verkleinert. Darüber hinaus ist eine Steuerung vorgesehen, die die Bewegung aller vier Messer synchronisiert, so dass das Rechteck immer gleich lange Seiten hat. Solche Messeranordnungen haben einen grossen veränderbaren Durchmesserbereich und sind einfach aufgebaut.

Eine ähnliche Anordnung ist in der CH-PS 651426 (GB-OS 2063580) geoffenbart. Die Ausbildung ist vom Prinzip her der in der DE-OS beschriebenen Ausbildung sehr ähnlich, jedoch ist die Schnittlinie, bzw. die Berührungslinie der Messerbacken gekrümmt.

Der gesamte Inhalt beider Druckschriften ist ebenso wie der Inhalt der im folgenden zitierten Druckschriften als Bestandteil der Offenbarung der vorliegenden Erfindung anzusehen.

Die FR-OS 2282179 beschreibt eine Messeranordnung mit radial geführten Messern, deren Schnittlinie in einem Winkel von ca. 45° zur Verschieberichtung liegt.

Infolge der weitgehenden Automatisierung von Fertigungsstrassen wurde immer wieder die Forderung nach erhöhter Standfestigkeit der Messerbakken gestellt. Dabei soll insbesondere berücksichtigt werden, dass die Abisoliervorgänge häufig unterschiedliche Durchmesser betreffen. Die Standfestigkeit der oben beschriebenen bekannten Messerbacken ist deshalb begrenzt, weil selbst bei unterschiedlichen Durchmessern des abzuisolierenden Kabels stets ein und dieselbe Stelle der Messer (zumindest mit-)belastet wird. Beispielsweise an Hand der Fig. 12 der DE-OS und an Hand der Fig. 2 der CH-PS ist verständlich, dass selbst bei zusammengeschobenen oder auseinandergezogenen Messern immer der mittlere Bereich der Messer die Schneidfunktion ausübt. Daher wird der mittlere Bereich stark abgenutzt, während die Randbereiche unter Umständen kaum einer Abnutzung unterliegen. Bei der FR-OS ergibt sich selbiges für die vorderste Spitze der Backen. Bei Halte- oder Zentrieranordnungen trat in ähnlicher Weise ein "Einschleifen" der Halte- bzw. Zentrierflächen auf, das sich nach geraumer Zeit nachteilig auf die Präzision auswirkte. Dies gilt auch für die Anordnung nach der US-PS 1597460, die allerdings nur über zwei Messerbacken verfügt und daher keine Zentrierung der Kabel erlaubt.

Es sind auch Messeranordnungen bekannt geworden, z.B. in der US-PS 3892145, die über drehbare Messer verfügen, deren Standzeiten auch über der von bisher bekannten statisch ruhenden Messern liegen. Nachteiligerweise verfügen diese jedoch über einen nur wenig veränderbaren Durchmesserbereich und können darüber hinaus auch nicht auf extrem kleine Durchmesser geschlossen werden, wie dies bei herkömmlichen Anordnungen der Fall ist. Ausserdem benötigen derartige Messeranordnungen zusätzliche Gleitlager und unter Umständen aufwendige Drehantriebe, weswegen sie sich in der Praxis nicht durchsetzen konnten.

Das britische Patent 521,433 aus dem Jahr 1940 beschreibt eine Abisoliereinrichtung mit drei einander überlappenden zueinander verschwenkbaren Messer. Diese Anordnung ist vor allem für Kabel mit geringem Durchmesser nicht anwendbar, da infolge der Überlappung der Messerschneiden nur spiralige Schnitte erzeugt werden können und daher die betreffenden Lagen nicht sauber abisoliert werden können. Bei dickeren Kabeln reicht andererseits die Festigkeit der vorgesehenen Rasiermesserklingen nicht aus, dicke Lagen nach dem (spiraligen) Einschneiden abzuziehen. Für jedes der Messer gibt es zwei Verstellmöglichkeiten, die in unterschiedlicher Kombination jeweils bewirken, dass für unterschiedliche Durchmesser von abzuisolierenden Kabeln auch gleiche Berührungsstellen an Messer vorkommen, was zu einer starken Abnützung führen kann. Dies ist umso unangenehmer, als für das Wechseln der Messer die gesamte Vorrichtung auseinander genommen werden muss.

In der DE-PS 28 48 445 (US-PS 4327609), sowie beispielsweise auch in der EP-OS 146 397 sind Anordnungen bekannt geworden, die zwar unterschiedliche Punkte zum Einsatz bringen, aber dafür, wie übrigens auch ein Teil der weiter oben genannten Konstruktionen, Rücken an Rücken bzw. in zwei Ebenen liegen. Dies bewirkt, dass beim Einschneiden eines Kabels dieses entlang seines Umfangs, in Axialrichtung gesehen, entlang unterschiedlicher Linien perforiert wird, was beim anschliessenden Abziehen zum unsauberen Abreissen führen kann; dies insbesondere dann, wenn die Messerschneiden mit einer Phase versehen sind, wie dies zur Erhöhung der Standfestigkeit unumgänglich ist.

Ziel der Erfindung ist es, die Standfestigkeit und Abisolierpräzision der Backenanordnung und der Messerschneiden, bzw. der Benützungsfläche um ein Vielfaches zu erhöhen.

Diese Aufgabe wird durch die Kennzeichen der Ansprüche 1 bis 3 in überraschend umfangreichem Masse gelöst. In Abhängigkeit von der Häufigkeit von Durchmesserveränderungen (unterschiedliche Kabeldurchmesser) bei einer Backenanordnung während eines Arbeitszyklus können mit einer erfindungsgemäss ausgebildeten Anordnung die Lebensdauer der Messer, bzw. die unveränderten Halteeigenschaften der Halte- oder Zentrierbacken im Vergleich zu den erwähnten herkömmlichen Anordnungen um bis zu zwei Zehnerpotenzen gesteigert werden. Das bedeutet wiederum geringeren Wartungsaufwand und damit geringere Störanfälligkeit bei gleichzeitig hochpräziser Schnitt-, bzw. Halte- oder Zentrierleistung durch die Halte-, Zentrier-, bzw. Messerbacken. Je mehr Backen in einer Anordnung vorgesehen sind, um so grösser wird der zweite Winkel. 90 Grad ist deshalb nicht erreichbar, da in diesem Fall keine Aenderung des Angriffsbereichs mehr möglich ist. Null Grad bedeutet, dass nur zwei Backen vorgesehen sind, deren zweite Gerade parallel zur ersten Geraden liegt. Bei dieser Extremstellung wäre nur noch ein Teil des erfindungsgemässen Effektes gegeben, gleichzeitig jedoch die Zentrierwirkung verloren.

Die Anordnung der Backen in einer Ebene bewirkt in hervorragender Weise, dass z.B. beim Abisolieren eines Kabels dieses exakt an einer einzigen Umfangslinie beschnitten wird, so dass es beim Abziehen der röhrenförmigen Hülse vom Kabel zu keinen unterschielichen Abzugsmomenten - und damit zu einem fehlerhaften Abreissen - kommen kann. Die Schneide kann an beiden Seiten mit einer Phase zu versehen, ein Ausbrechen der Schneide ist dadurch verhindert (z.B. bei Hartmetallen).

In den Merkmalen der Unteransprüche sind weitere vorteilhafte Ausgestaltungen und Variationsmöglichkeiten der Erfindung beschrieben.

Eine Anordnung gemäss Anspruch 4 und 5 zeichnet sich durch geometrische Exaktheit und einfache Herstellung aus - alle Backen sind gleich aufgebaut.

Eine Anordnung gemäss Anspruch 6 ermöglicht grösste Universalität von kleinen bis grossen Durchmessern. Die Veränderung der Schnitt- bzw. Haltedurchmesser bei Verstellung der Backen zueinander erfolgt dabei bei einer geradlinigen Ausführung linear und bei der Ausführung mit gekrümmter Schneidelinie, bzw. Haltefläche in Abhängigkeit von der Kurvenfunktion. Die Ansteuerung der Anordnung erfolgt für alle Backen synchron.

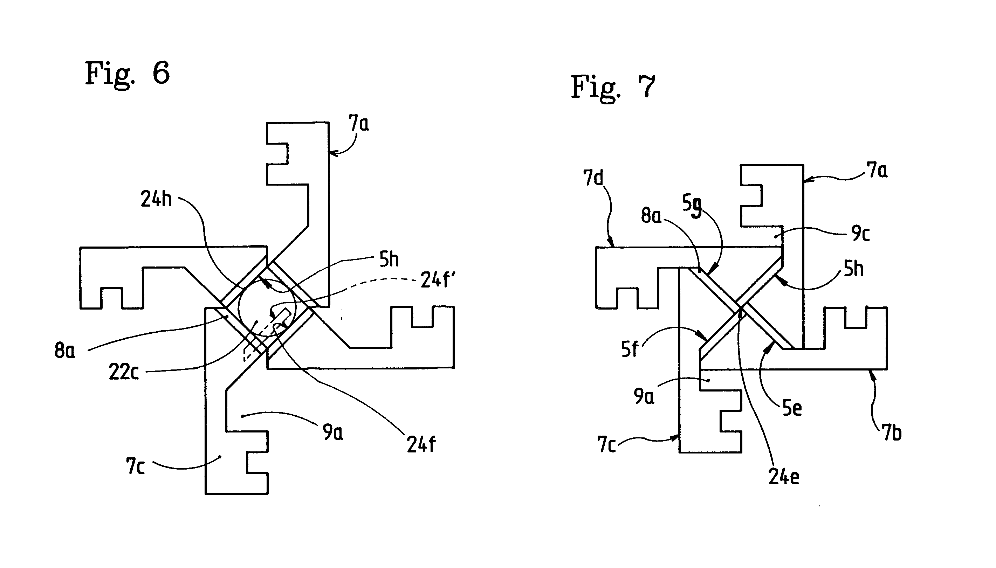

In der US-PS 4528741 ist zwar auch eine Möglichkeit dargestellt, die Schnittflächen in eine Ebene zu legen (Fig. 7), dies ist jedoch nur für eine Zweieranordnung von Messern gemäss der dortigen Anordnung möglich. Da sich bei einer Viereranordnung jedoch zumindest die nebeneinanderliegenden Messer überlappen müssen, kommt es bei der Ausführung nach der US-PS zwangsläufig wieder zu einem geringfügigen Unterschied der einen und anderen Seite, auch wenn der Abstand zwischen den Messern vielleicht nur wenige Hundertstel Millimeter beträgt. Bei kleinen Kabeldurchmessern oder gut haftenden oder harten bzw. zähen Isolierungen kann dies bereits sehr störend sein und zu Ausschussproduktion führen.

Die Ansprüche 7 und 8 kennzeichnen vorteilhafte Führungsmechanismen, die einfach und kompakt aufgebaut sind und eine spielfreie und lange Lebensdauer der Anordnung gewährleisten, wobei die Steuerung nach Anspruch 7 jener nach der EP-A195932 entspricht, die hiermit als vollständig im Rahmen dieser Erfindung geoffenbart gilt.

Lebensdauer erhöhende Massnahmen, die gleichzeitig einen raschen Werkzeugwechsel erlauben und trotzdem eine hohe Führungspräzision ermöglichen, ergeben sich, wenn die Backen zweiteilig ausgebildet sind und einen Grundkörper aufweisen, der auswechselbare Halte-, Zentrier- oder Schneideplättchen -vorzugsweise aus Hartmetall oder Sintermaterial - trägt, wobei die Backen Arretierzapfen tragen, die mit gegengleichen Aufnahmen der Plättchen zusammenwirken.

Durch die Wahl der Lage der Messerbacken nach dem Anspruch 9 verstärkt sich noch der positive Effekt der Erfindung hinsichtlich einer exakten Abreisslinie und einer eindeutigen Schnittführung entlang einer einzigen Umfangslinie. Dadurch können sowohl weiche Kunststoffe eingeschnitten, als auch z.B. harte Drahtgeflechte (Abschirmung) oder Drähte (Leiter) durchgeschnitten werden. Die Dauerhaftigkeit von Messerschneiden ist erhöht.

Die Krümmung der Berührungslinie nach Anspruch 10 ermöglicht bei konkaver Ausbildung das Erfassen eines grösseren Aussendurchmessers der Gegenstände und bei konvexer Ausbildung die einfache Anwendung verschwenkbarer Backen, so dass diese eng aneinanderschliessen, ohne einander zu überlappen.

Eine selbsthemmende Wirkung mit Federbelastung verhindert ein selbständiges unkontrolliertes Verstellen einmal gewählter Positionen. Dadurch ist eine Zentrier- oder Halteanordnung, deren Vorspannung geringe Toleranzen an der Oberfläche der Gegenstände zulässt, gegeben, wobei der Angriffsdruck auf die Oberfläche der Gegenstände stets konstant ist. In den meisten Ausführungen können Auflaufschrägen mit geeigneter Reibungshaftung die Selbsthemmung bewirken.

Als mögliches Anwendungsgebiet der Erfindung dient beispielsweise ein Gerät nach der EP-A-195932, die ebenso selbsthemmende Wirkung offenbart.

Die Anordnung gemäss Anspruch 11 ermöglicht ein mehrstufiges Abisolieren in einem einzigen Arbeitsgang. Diese Anordnung ermöglicht auch die Anwendung in vollautomatischem Betrieb.

Obzwar die Erfindung insbesondere anhand von Abisoliereinrichtungen beschrieben ist, ist ihre Anwendung auch bei vielen anderen Halte- oder Schneideaufgaben möglich. Derartige Anwendungen liegen somit auch im Rahmen der Erfindung.

An Hand der Skizzen wird die Erfindung beispielhaft näher erläutert. Es zeigen dabei

| | |
|---|---|
| Fig. 1 | eine Draufsicht auf eine Anordnung mit vier Haltebacken und einer Steuereinrichtung in offenem Zustand, |
| Fig. 2 | dieselbe Anordnung in geschlossenem Zustand, |
| Fig. 3 | eine Anordnung mit drei Haltebacken in geöffnetem Zustand, |
| Fig. 4 | eine andere Anordnung mit fünf Haltebacken in geschlossenem Zustand, |
| Fig. 5 | eine andere Anordnung mit drei Haltebacken, die einander nicht formschlüssig berühren, |
| Fig. 6 | eine Anordnung von Schneidebacken in gänzlich geöffnetem Zustand, |
| Fig. 7 | dieselbe Anordnung geschlossen, |
| Fig. 8 | eine Anordnung mit schwenkbaren Schneidebacken geschlossen, |
| Fig. 9 | dieselbe Anordnung geöffnet, |
| Fig.10 | eine andere Variante mit gekrümmter Berührungslinie in halbgeöffnetem Zustand, |
| Fig.11 | Messer- und Haltebacken hintereinander montiert in geöffnetem Zustand, teilweise geschnitten bzw. abgedeckt, |
| Fig.12 | einen Querschnitt durch den Schnitt XII - XII aus der Fig.11, |
| Fig.13 | einen Querschnitt durch den Schnitt XIII - XIII aus der Fig.11, |
| Fig.14 | einen Querschnitt durch ein Detail der Fig.13 nach dem Schnitt XIV - XIV, |
| Fig.15 und 16 | einen Messerbacken mit auswechselbaren Schneidplättchen in Seiten- und Aufriss, |
| Fig.17 | eine teilweise abgedeckte, |

bzw. geschnitten dargestellte Kombination von Haltebacken und Messerbacken zu einer Halte- und Schneidanordnung, und

| | |
|---|---|
| Fig.18 | einen korrespondierenden Teil gemäss dem Stand der Technik. |

Die Figuren werden zusammenhängend beschrieben. Gleiche Bezugsziffern bedeuten gleiche oder ähnliche Bauteile. Bei gleichen Bezugsziffern geben unterschiedliche Indizes unterschiedliche Ausführungen oder gleiche Bauteile in einer Baugruppe an.

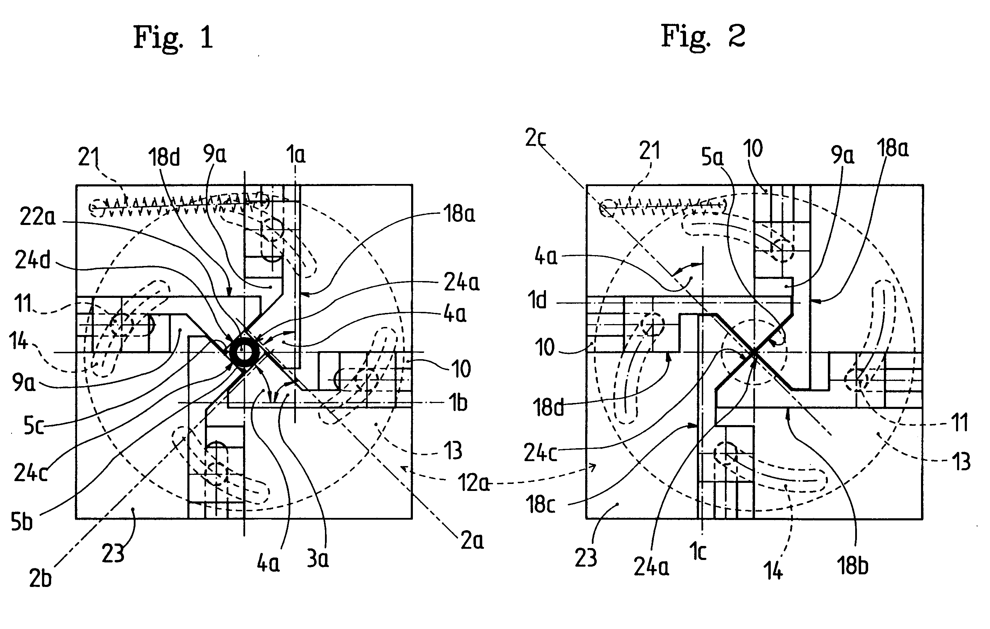

Das Ausführungsbeispiel gemäss Fig.1 und 2 zeigt eine offene und geschlossene Anordnung von vier Haltebacken 18a-d, die jeweils entlang strichpunktiert dargestellter Geraden 1a-d längsverschoben werden können. Die Haltebacken 18a-d weisen jeweils Ausnehmungen 9a auf, so dass sie ineinandergreifen können. Sie verfügen über je eine Berührungslinie 5a-d, an der im geöffneten Zustand der Haltebacken ein stabförmiger Gegenstand 22 gehalten werden kann. In der Fig.2 sind die Haltebacken 18a-d völlig geschlossen, d.h. sie sind in einander zugeordneten Ausnehmungen 9a versenkt, und die Berührungslinien 5a-d umschreiben eine Fläche mit Nullausdehnung.

Die Berührungslinie der Haltebacken 18a-d ist eine gerade Linie und erstreckt sich je entlang einer zweiten, in der Zeichnung strichpunktpunktierten Geraden 2a-d. Jede zweite Gerade 2a-d steht in je einem Winkel 4a zu der jeweils zugeordneten ersten Geraden 1a-d, der 45 Grad beträgt. Benachbarte erste Geraden 1a-d stehen untereinander in einem Winkel 3a von 90 Grad, die ersten Geraden 1a-d nicht benachbarter Haltebacken stehen in einem Winkel von 180 Grad zueinander.

Das Öffnen der Haltebacken 18a-d ist schrittweise aus der Abfolge der Fig.1-2 ersichtlich. Es erfolgt durch ein synchrones Auseinanderziehen der Haltebacken 18a-d, wodurch sich zwischen den Berührungslinien 5a-d eine kontinuierlich vergrösserbare Fläche ergibt. Innerhalb dieser Fläche kann somit ein Gegenstand 22a gehalten werden, der beispielsweise eine längliche Ausdehnung haben kann und die Zeichenebene durchstösst.

Für das Auseinanderziehen sind die Haltebacken in Schienen 10 einer Führungsplatte 23 gleitgelagert. Strichliert dargestellte Führungszapfen 11 sind starr mit den Haltebacken 18a-d verbunden. Diese Führungszapfen 11 greifen in (ebenfalls strichliert dargestellt) spiralig gekrümmte Steuernuten 14 ein, die in einer Scheibe 13 ausgebildet sind. Die Scheibe 13 mit den Steuernuten 14 bildet somit eine Steuereinrichtung 12a, die durch Verdrehen um die eigene Achse in die eine Richtung die Haltebacken 18a-d auseinanderzieht, bei einem Drehen in die andere Richtung die Haltebacken jedoch zusammenschiebt. Dabei gleiten die Führungszapfen 11 auf der schiefen Gleitfläche der Steuernuten 14 mit einer bestimmten Reibung, wodurch sich bei einem bestimmten Steigungswinkel eine selbsthemmende Wirkung gegen unbeabsichtigtes Verstellen ergibt.

Die Scheibe 13 ist in nicht dargestellter Weise an der Führungsplatte 23 drehbar gelagert und mit dieser über eine Zugfeder 21 verbunden. Die Zugfeder 21 belastet die Steuereinrichtung 12a in diejenige Drehrichtung der Scheibe 13, die zu einem Schliessen der Haltebacken 18a-d führt.

Wird also die Scheibe 13 willkürlich in Oeffnungsrichtung der Backen 18a-d gedreht, wie dies beispielsweise aus Fig.1 ersichtlich ist, und wird sodann ein Gegenstand 22a zwischen die Berührungslinien 5a-d geklemmt und die Scheibe 13 wieder ausgelassen, so schliessen sich die Haltebacken 18a-d unter dem Druck der Feder 21. Eine Gleichförmigkeit der Federkraft vorausgesetzt, erfolgt somit unabhängig vom Durchmesser des Gegenstandes 22 ein gleichförmiger Berührungsdruck an dessen Oberfläche. Ein starkes Anpressen, das für den Gegenstand 22 schädlich sein könnte, entsteht daher nicht.

Wenn der Gegenstand 22a (wie in vielen Fällen) einen runden Umfang aufweist, liegt die Berührungslinie 5a-d nur in einem sehr geringen, linienförmigen Bereich 24a-d auf der Oberfläche des Gegenstandes 22 Dieser Bereich 24a-d liegt, wie aus den beiden Fig.1 und 2 ersehen werden kann, stets an einer anderen Stelle der Berührungslinie 5a-d der Haltebacken 18. In der Fig.2 liegt der Bereich 24a-d theoretisch ganz am Anfang jeder Berührungslinie 5a-d. Durch das Wandern dieses Bereiches 24a-d nach aussen wird auch die Abnützung an der Oberfläche der Haltebacken 18a-d über einen breiten Bereich verteilt, so dass es kaum zu ausgeprägten Abnützungserscheinungen an einer einzigen Stelle kommen kann - eine durchschnittliche Änderung der Haltedurchmesser vorausgesetzt.

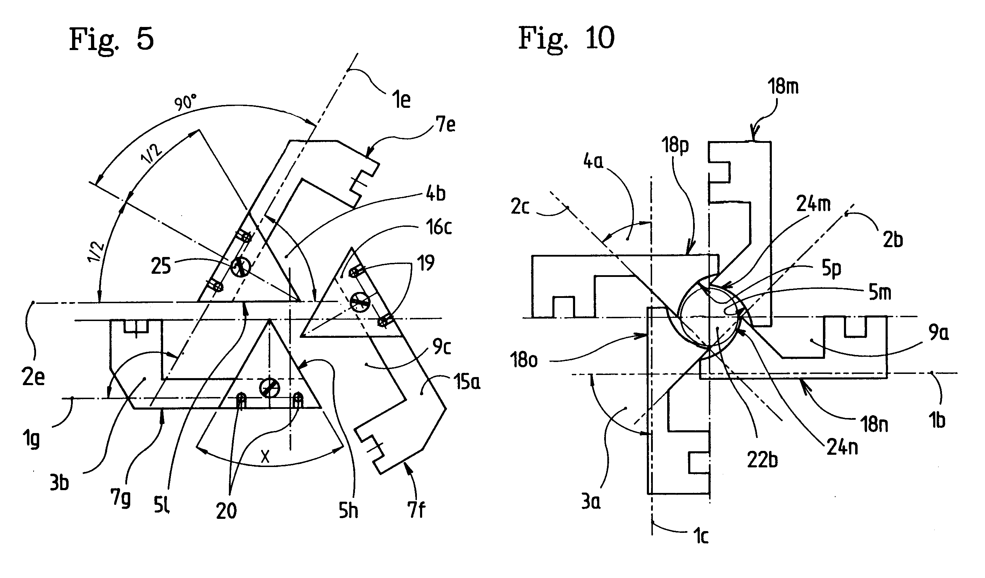

In der Fig.10 ist eine ähnliche Anordnung, allerdings mit einer gekrümmten Berührungslinie 5m-p mit Haltebacken 18m-p ausgebildet. Die Anfangs- und Endpunkte jeder Berührungsline 5m-p sind mittels einer Geraden verbindbar, die wiederum auf der zuvor beschriebenen zweiten Geraden 2a-d liegt.

Durch die Krümmung der Berührungslinie ist zwar die Verschiebung eines Bereiches 24m-p für die Berührung eines Gegenstandes 22b nicht optimal, es lassen sich jedoch bei sonst gleichen Abmessungen der Haltebacken 18m-p grössere Durchmesser der Gegenstände 22b halten (vgl. Fig.1, 18a-d und 22a).

In den Fig.6 und 7 sind schematische Messerbacken 7a-d dargestellt, die im Prinzip ähnlich wie die zuvor beschriebenen Haltebacken 18a-d ausgebildet sind. Selbstverständlich können auch die Messerbacken 7a-d über eine gekrümmte Berührungslinie, bzw. Schneidelinie verfügen. Die Berührungslinien bzw. Schneidelinien sind mit 5e-h bezeichnet. Auch bei den Berührungslinien 5e-h der Messerbacken 7a-d ist ein Verschieben des Bereiches 24e-h für die Schnittberührung mit einem Gegenstand 22c leicht erkennbar. Dringen die Schneiden der Messerbacken 7a-d in die Oberfläche des Gegenstandes 22c ein, verschiebt sich automatisch der Bereich 24f - 24f′ zum Rand hin (strichliert in Fig.6). Auch hier erfolgt somit die Abnützung der Messerschneide bzw. Berührungslinie 5e-h über eine bestimmte Länge gleichmässig verteilt. Durch derartige Messerbacken 7a-d können daher in vorteilhafter Weise z.B. sehr dünne Drähte abisoliert oder geschnitten werden.

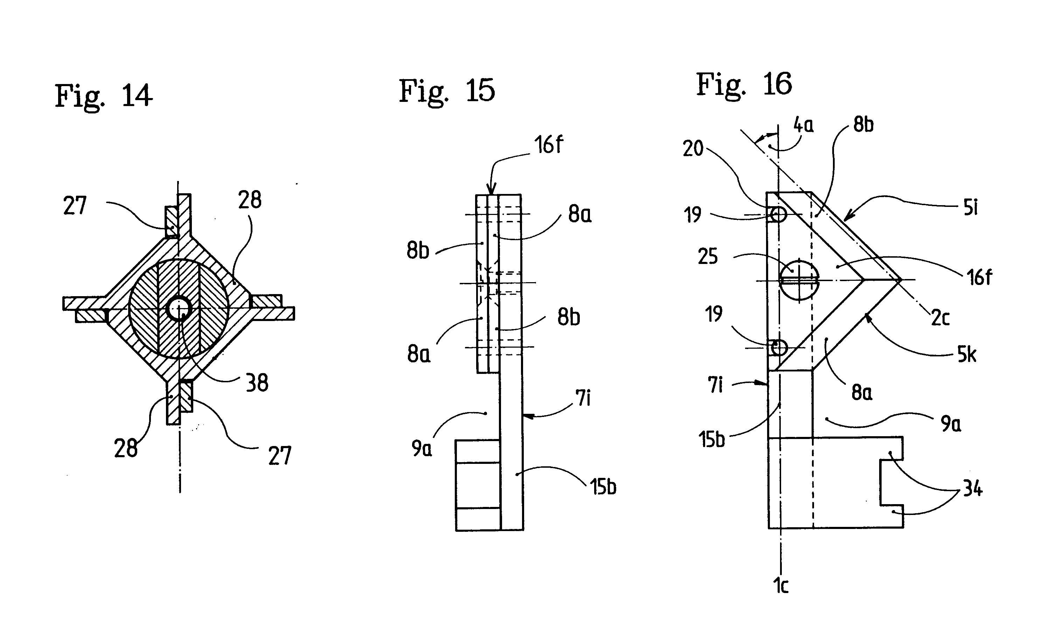

Für höchste Ansprüche ist es auch vorgesehen, Messerbacken 7i (Fig.15,16) mit Hartmetallschneidplättchen 16f auszustatten. Die Messerbacken 7i sind in diesem Fall mit einem Grundkörper 15b versehen, der zwei Arretierzapfen 19 aufweist, die in Ausnehmungen 20 der Schneidplättchen 16f eingreifen. Die Schneidplättchen 16f sind mittels je einer Schraube 25 mit dem Grundkörper 15b verschraubt. Die Arretierzapfen 19 gegewährleisten eine spielfreie Lage der Schneidplättchen 16f. Die Schneidplättchen 16f sind als Wendeschneidplättchen ausgeführt und verfügen daher über zwei Berührungslinien 5i und 5k, wobei zunächst die Berührungslinie 5i, bzw. die Messerschneide dieser Seite zum Einsatz kommt. Ist das Schneidplättchen 16f an seiner Berührungslinie 5i abgenutzt, kann es sehr einfach und schnell lediglich durch Lösen der Schraube 25 abgehoben, umgekehrt und wieder befestigt werden. Somit ist dann die Berührungslinie 5k im Schneideinsatz.

Dazu ist es erforderlich, dass die Arretierzapfen 19 spiegelbildlich zur Schraube 25 angeordnet sind.

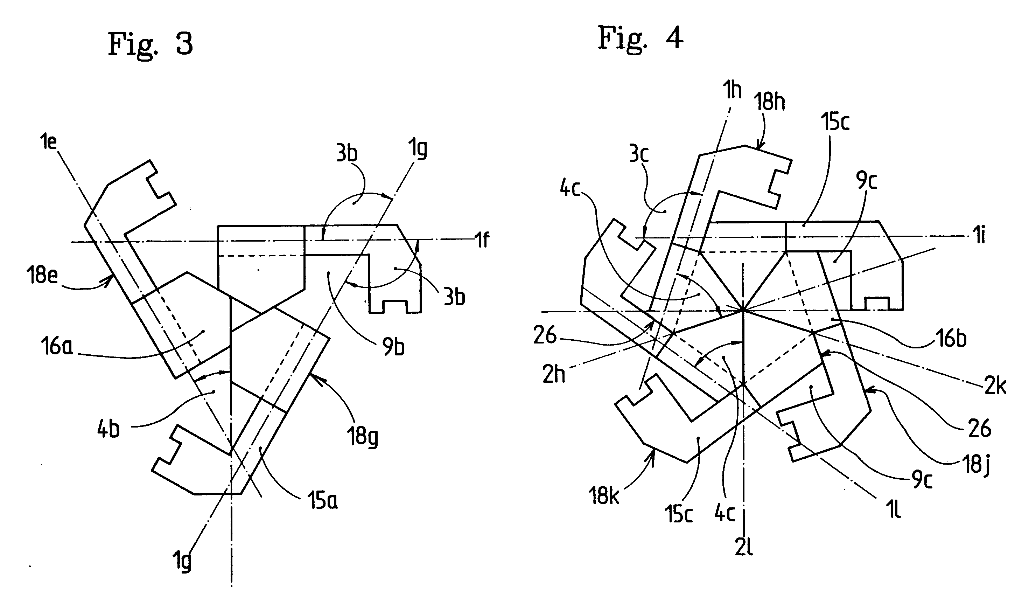

In den Fig.3 bis 5 sind ebenso zwei geteilte Backen (Haltebacken 18e-g (Fig.3) und 18h-l (Fig.4), sowie Schneidebacken 7e-g (Fig.5)) dargestellt, die ebenso jeweils zweigeteilt sind und über einen Grundkörper 15a (Fig.3 und 5), bzw. 15c (Fig.4) verfügen. Der Unterschied zwischen den Grundkörpern 15a und 15c liegt in einer Abflachung 26 der Grundkörper 15c (Fig.4). Die Abflachung 26 ermöglicht, dass die fünf Backen 18h-l gemäss dem Ausführungsbeispiel nach Fig.4 einander berühren ohne einander zu überschneiden.

Bei allen Varianten ist jedenfalls das gleiche Prinzip vorherrschend, weshalb darauf nicht näher eingegangen werden muss. Erwähnt sei lediglich, dass die auswechselbaren Haltebacken in der Fig.3 mit 16a, in der Fig.4 mit 16b bezeichnet sind.

In der Fig.5 sind auswechselbare Schneideplättchen 16c dargestellt, die - wie weiter oben beschrieben - auf den Grundkörpern 15a befestigt sind.

Bei allen dargestellten Varianten mit Ausnahme der Fig.5 berühren einander die Haltebacken 18, bzw. Schneidebacken 7 stets. Das Beispiel der Fig.5 zeigt jedoch, dass diese geschlossene Berührung im Sinne der Erfindung nicht unbedingt gegeben sein muss, um akzeptierbare Schneide- oder Halteeigenschaften zu erlangen. Der Vorteil dieser Anordnung liegt aber unter anderem darin, dass relativ wenige Bauteile vorgesehen sind, die daher unkompliziert geführt sein können. Darüber hinaus sind die geometrischen Abmessungen der Wendeschneideplättchen 16c so, dass sie auch für eine Anordnung mit sechs Schneidebacken 7 vorgesehen werden können.

Eine derartige Anordnung ist nicht dargestellt, jedoch leicht vorstellbar, indem man die dargestellten Schneidebacken 7e-g um 60 Grad nach rechts verdreht und über die dargestellte Zeichnung placiert. Dadurch werden die Zwischenräume zwischen den Schneidebacken 7e-g mit gleichartigen Schneidebacken ausgefüllt.

Die Schneidelinie 5l-n ist, wie am Schneidebacken 7e dargestellt, günstigerweise sowohl nach links als auch nach rechts durch gleich viel Material des Wendeschneideplättchens 16c abgestützt. Dies ist für das Wenden des Wendeschneideplättchens notwendig, aber auch hinsichtlich der Kraftübertragung von dem Grundkörper 15a auf die Schneidelinie 5l-n günstig. Eine Verbindung des äussersten Punktes mit der Schraube 25 schliesst mit der ersten Geraden 1e-g jeweils einen rechten rechten Winkel ein.

In den Figuren sind drei bis fünf Halte- bzw. Messerbacken dargestellt. Es versteht sich von selbst, dass der Anzahl dieser Backen theoretisch keine Grenze gesetzt ist, jedoch ist z.B. eine Anordnung mit nur zwei Backen insofern ungünstiger, als ein schneidender Gegenstand nicht mehrseitig geführt ist und daher die beiden Backen seitlich verlassen kann. Anordnungen mit mehr als sechs Backen sind hinsichtlich der praktischen Ausführung sicher etwas kompliziert, beispielsweise nur in Form eines Stanzverfahrens herstellbar. Sollte dabei jedoch nicht äusserste Präzision gewahrt werden können, würde die gesamte Anordnung unter Umständen leicht verklemmen, bzw. nicht mehr funktionieren.

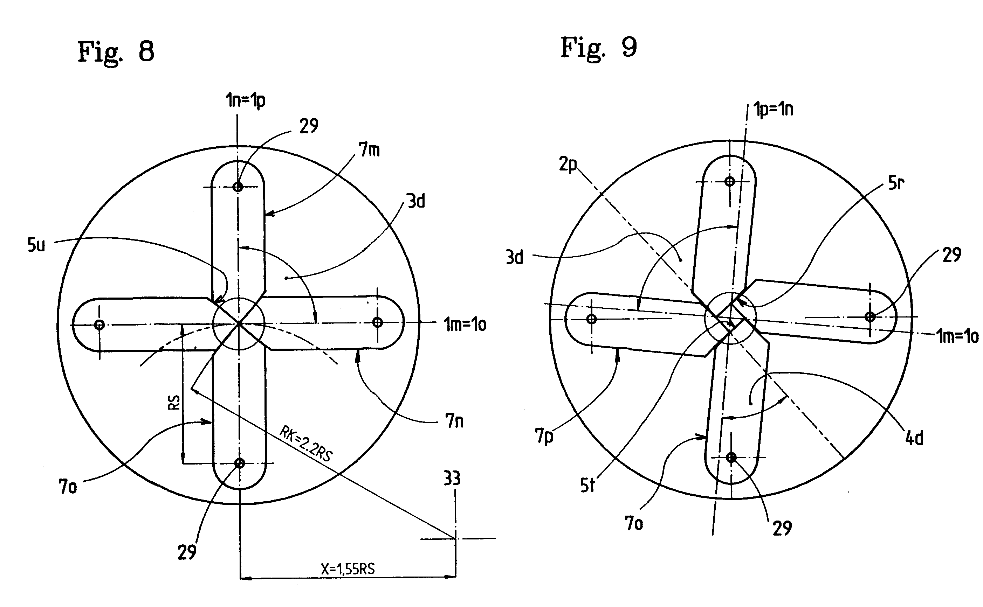

Das System der Messerbacken 7m-p gemäss Fig.8 und 9 ist grundsätzlich unterschiedlich zu den bisher beschriebenen Ausführungsformen. Die Führung der Messerbacken 7m-p ist anders. Die Backen 7m-p sind um je eine Achse 29 schwenkbar. Die Führungs-, bzw. Schneidelinien 5r-u sind mit einem Radius RK konvex gekrümmt ausgebildet, wobei sich der Radius dieser Krümmung aus dem 2,2fachen Wert des äussersten Schwenkradius RS der einzelnen Messerbacken 7m-p ergibt, der wiederum definiert ist durch den Abstand zwischen den einzelnen Achsen 29 und dem davon jeweils am weitesten entfernten Punkt der zugehörigen Berührungs- bzw. Schneidelinie 5r-u. Der Mittelpunkt des Krümmungsradius RK liegt auf einer strichpunktiert dargestellten Linie 33, die sich in einem Abstand von 1,55 x RS vom der jeweils zugeordneten Achse 29 befindet. Diese Art von Schneidebacken 7m-p ist gegenüber dem verschiebbanen Backen mit einem geringerem Aufwand herstellbar (es entfallen z.B. Schienenführungen oder dergleichen); allerdings ist die Ansteuerung z. B. bei rotierenden Backen mit einem etwas grösserem Aufwand verbunden.

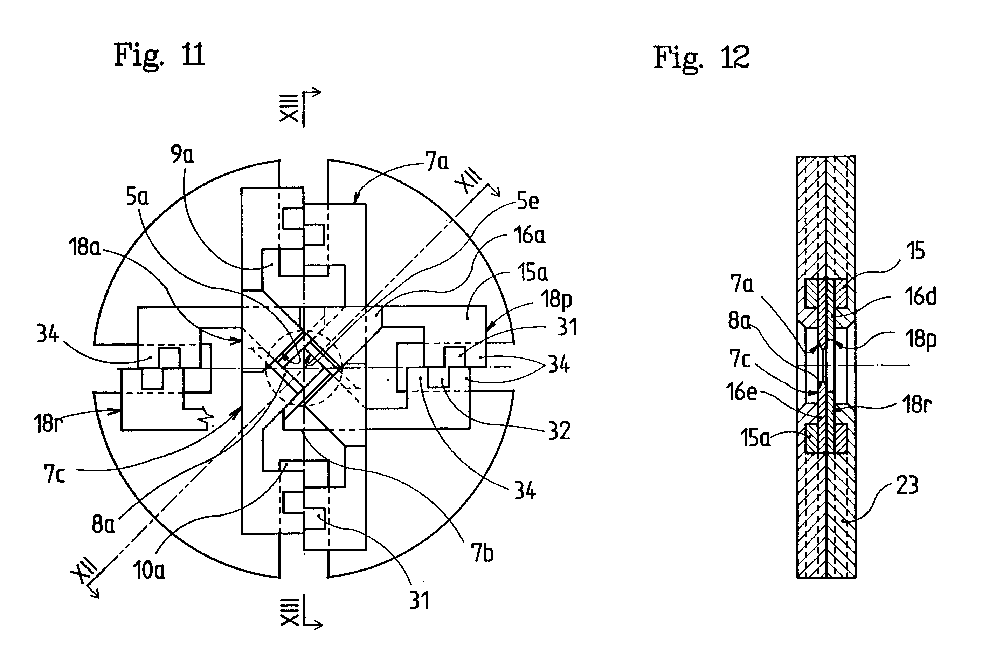

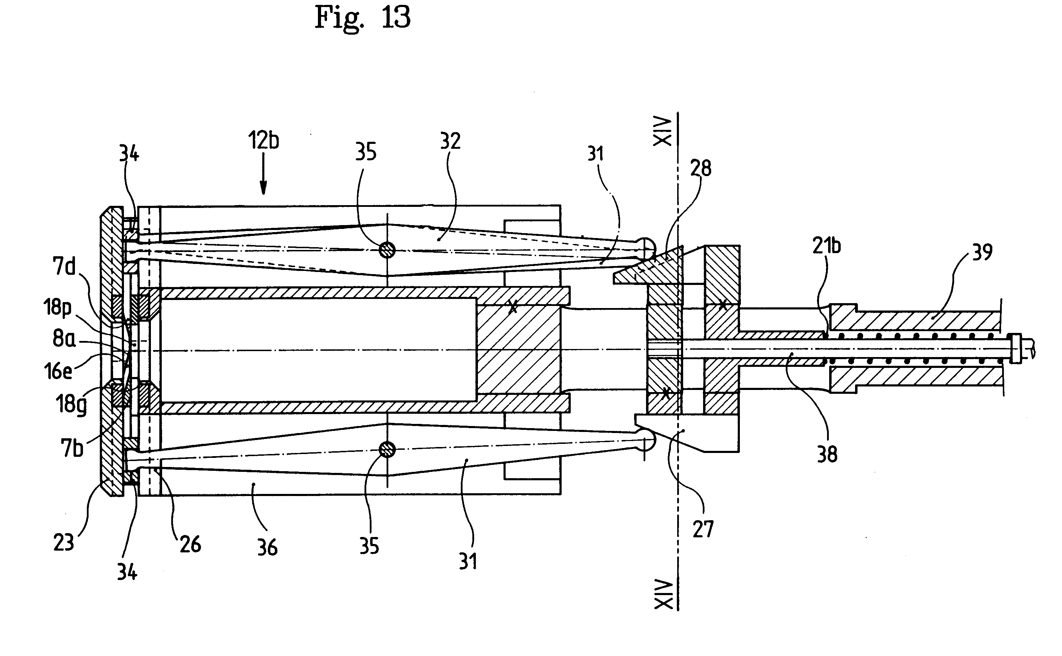

In der Fig.11 sieht man den Zusammenbau einer Anordnung mit Messerbacken 7e-h und von Haltebacken 18o-r. Die Steuerung ist in dieser Fig. nicht näher dargestellt, jedoch sind die Führungszapfen an zweiarmigen Hebeln 31,32 ausgebildet und greifen zwischen je zwei Fortsätzen 34 der Messer-, bzw. Haltebacken ein (vgl. Fig.13).

Die Haltebacken 18a-d halten, bzw. zentrieren einen Gegenstand im Betriebsfeld. Die Messerbacken 7e-h schneiden den Gegenstand in der Stellung nach Fig.11 stark ein. In Fig.12 ist diese Situation im Schnitt entlang der Schnittlinie XII -XII dargestellt. Die Schneiden 5e-h der Messerbacken 7a-d liegen einander exakt gegenüber, so dass beispielsweise beim Abisolieren des Gegenstandes gleiche Zugkräfte auftreten (vgl. Fig.17). In der Fig.18 ist im Vergleich dazu eine herkömmliche Messerbackenanordnung (70a, b) dargestellt, deren Schneiden in einem Abstand x einander gegenüberliegen.

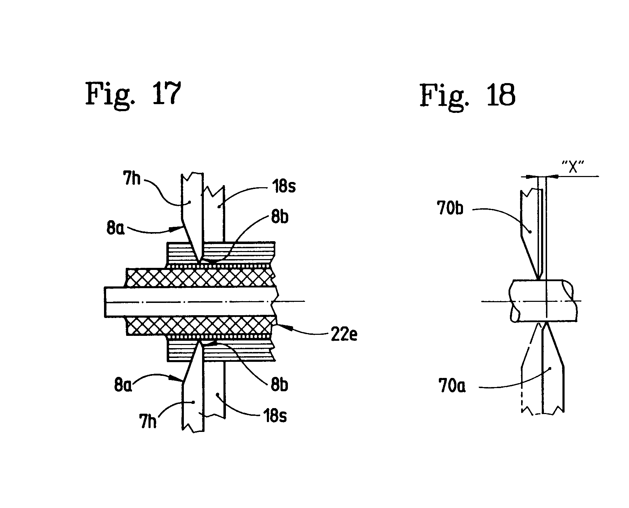

Zur Erläuterung der Stützphase 8b nach Fig.17 sei noch erwähnt, dass eine derartige Ausbildung vor allem bei Sintermaterial-Schneideplättchen von Vorteil ist, um ein Ausbrechen derselben zu verhindern. Damit kann auch sehr leicht beispielsweise eine Blechabschirmung des Gegenstandes 22e durchgeführt werden, ohne die Lebensdauer der Schneideplättchen stark zu reduzieren.

Des weiteren sind in der Fig.12 die Führungsplatte 23 sowie die Grundkörper 15a für die Haltebacken 18p und 18r, sowie für die Messerbacken 7a und 7c zu sehen. Die Schneiden der Messerbacken 7a-d sind mit einer Phase 8a versehen.

Aus der Fig.13 ist die Steuereinrichtung 12b für die Anordnung der Backen im Schnitt ersichtlich. Die zweiarmigen Hebel 31 bzw. 32 sind über je eine Schwenkachse 35 in einer Halterung 36 gelagert. Die Hebel 31 greifen an die Haltebacken 18u-r, während die Hebel 32 an die Schneidebacken 7a-d greifen. Die Steuerung erfolgt über Keilflächen 27 bzw. 28 für die Hebel 31, bzw. 32, die schubgesteuert von einer Schubstange 38 beaufschlagt werden. Die Hebel 31 sind dabei über eine Feder 21b federbeaufschlagt. Anstelle der Anwendung einer Feder 21b könnte die Steuerung den Hebel 31 auch über Zwangsnuten oder Gelenke erfolgen, so dass die Hebel 31 sowohl in die eine, als auch andere Richtung federlos zwangsgesteuert sind.

Die Keilfläche 27 ist mit den zugeordneten Hebeln 31 selbsthemmend ausgeführt, so dass ein verstärkter Druck von den Haltebacken 18o-r auf die Hebel 31 nicht zu einem Zurückschieben der Keilflächen 27 gegen die Feder 21b führen kann. Ein unkontrolliertes Verändern der vorgegebenen und eingestellten Abstände der Haltebacken 18u-r zueinander ist daher nicht möglich. Die Keilflächen 28 sind von einer Schubstange 38 beaufschlagt, die mit der Feder 21b in einem büchsenförmigen Halteteil 39 geführt ist. Zur detaillierten Erläuterung der Mechanik dieser Steuereinrichtung 12b wird auf die EP-A-195932 verwiesen.

Aus der Fig.14 sind Details zu der Keilsteuerung durch den Schnitt XIV- XIV der Fig.13 besser ersichtlich.

Durch die dargestellten Fig. und deren Beschreibung ist die Erfindung nicht eingeschränkt. Vielmehr könnten beispielsweise auch die Steigungswinkel der Berührungslinien können variieren, gegebenenfalls könnten, insbesondere bei Haltebacken oder Zentrierbacken auch gezahnte Oberflächen vorgesehen sein.

Bezugszeichenliste

| | |
|---|---|
| 1 | Erste Gerade a-d Fig. 1,2; e-g Fig. 3,5; h-l Fig 4; m-p Fig.8,9 |
| 2 | Zweite Gerade a-d Fig. 1,2; e-g Fig 3,5: h-l Fig. 4; m-p Fig. 8,9 (Tangente) |
| 3 | Erster Winkel a Fig. 1,2; b Fig 3,5; c Fig. 4; m-p Fig. 8,9 |
| 4 | Zweiter Winkel a Fig. 1,2; b Fig. 3,5; c Fig. 4; d Fig. 8,9 |
| 5 | Berührungslinie a-d Haltebacken Fig. 1-2; i-k Fig. 15,16 e-h Schneidebacken Fig. 6-7 m-p gekrümmt Fig. 10; r-u Fig. 8-9 |
| 7 | Messerbacken a-d (gerade 1 Phase) Fig. 6-7; Fig. 11-13; e-g gerade Fig. 5; M-p Fig. 8-9; 15,16,17 h Fig. 17; Fig. 15 - 18 |
| 8 | Phase a Fig. 6-7; 11 - 13 a + b |
| 9 | Ausnehmung a Fig. 1 -2, 6 -7; 10,11;15-16; b Fig. 3; C Fig. 4,5 |
| 10 | Schiene Fig. 1-2 |
| 11 | Führungszapfen Fig. 1,2 |
| 12 | Steuereinrichtung a Fig. 1,2; b Fig. 13 |
| 13 | Scheibe Fig. 1,2 |
| 14 | Steuernut a Fig 1,2 |
| 15 | Grundkörper a Fig 3,5,11-13; b 15-16; e Fig. 4 |
| 16 | Schneideplättchen a Fig 3; b Fig 4; c Fig 5; d Fig 11-13; f Fig. 15,16 |
| 17 | Messeranordnung |
| 18 | Haltebacken a-d Fig. 1-2; e-g Fig 3; h-l Fig 6; m-p Fig.10; o-r Fig. 11-13; s Fig. 17 |
| 19 | Arretierzapfen Fig 5, 15-16 |
| 20 | Aufnahmen Fig 5,15-16 |
| 21 | Feder Fig. 1-2; b Fig.13 |
| 22 | Gegenstand a Fig. 1; b Fig. 10; c Fig. 6-7; e Fig. 17 |
| 23 | Führungsplatte Fig 1-2 |
| 24 | Bereich a-d Fig 1; m-p Fig 10; e-n Fig 6,7 |
| 25 | Schraube |
| 70 | Stand der Technik Messerbacken a-b Fig. 18 |
| 26 | Abflachung Fig 4 |
| 27,28 | rotierende Keilflächen |
| 29 | Achse Fig 8-9 (Drehpunkt) |
| 31,32 | zweiarmige Hebel |
| 33 | Linie |
| 34 | Zapfen |
| 35 | Schwenkachse |
| 36 | Halterung |
| 37 | Schubteil |
| 38 | Schubstange |
| 39 | Halteteil |
| RS | Verschwenkradius |

**Patentansprüche**

1. Anordnung von mindestens drei, in einer Ebene liegenden Halte-, Zentrier- oder Messerbacken (7,18) für Abschneide und/oder Abisoliervorrichtungen für stab- oder kabelförmige Gegenstände, dadurch gekennzeichnet, dass die Backen (7,18) so zwangsgesteuert schieb- oder verschwenkbar sind, dass jedem Durchmesser eines Gegenstandes ein anderer Punkt jeder Schneide, bzw. eine andere Linie einer jeden Halte- oder Zentrierfläche zugeordnet ist, bzw. mit dem Gegenstand (22) in tangentiale Anlage bringbar ist.

2. Anordnung von mindestens drei in einer Ebene liegenden Halte-Zentrier- oder Messerbacken (7,18) für Abschneide- und/oder Abisoliervorrichtung für stab- oder kabelförmige Gegenstände (22), welche Backen (7,18) in Richtung je einer ersten Geraden (1) verschiebbar sind, wobei die Lage der ersten Geraden (1a-c) durch die Verschieberichtung definiert sind, welche einander benachbarten ersten Geraden (1) einen ersten Winkel (3) miteinander bilden, und wobei in Ansicht des Backens (7,18) dessen dem Gegenstand (22) zuwendbare Oberfläche (Halte- oder Zentrierfläche oder Messerschneide) durch eine Linie (5) gebildet ist, die in eine tangentiale Anlage an den Gegenstand (22) bringbar ist, dadurch gekennzeichnet, dass die Backen (7,18) jeweils Ausnehmungen (9) für das Entlanggleiten der Berührungslinie (5) eines jeweils benachbarten Backens (7,18) aufweisen.

3. Anordnung von mindestens drei in einer Ebene liegenden Halte-, Zentrier- oder Messerbacken (7,18) für Abschneide- und/oder Abisoliervorrichtungen für stab- oder kabelförmige Gegenstände (22), dadurch gekennzeichnet, dass die Backen (7,18) in Richtung je einer ersten Geraden (1) verschwenkbar sind, wobei die Lage der ersten Geraden (1) durch die Lage einer Tangente (1m-p) auf den äussersten Verschwenkradius (RS) jedes Backens (7m-p) definiert ist, welcher äusserste Verschwenkradius (RS) durch den Abstand von einem Drehpunkt (29) zum davon entferntesten Punkt jedes Bakkens (7m-p) bestimmt ist, welche einander benachbarten ersten Geraden (1) einen ersten Winkel (3) miteinander bilden, und wobei die Endpunkte einer Linie (5), die in Ansicht des Backens dessen dem Gegenstand (22) zuwendbare Oberfläche zeigt, eine zweite Gerade (2) definieren und dass jede zweite Gerade (2) in einem zweiten Winkel (4) von weniger als 90 Grad zu der ihr zugeordneten ersten Geraden (1) liegt, und dass die Linie (5) in eine tangentiale Anlage an den Gegenstand (22) bringbar ist.

4. Anordnung nach Anspruch 2 oder 3, dadurch gekennzeichnet, dass der erste Winkel (3) nach der Formel 360:n bestimmt ist, wobei n die Anzahl der Backen (7 oder 18) bedeutet, während ein zweiter Winkel (4) zwischen der zweiten Geraden (2) und der jeweils zugeordneten ersten Geraden nach der Formel 90-(1/2)x(3) bestimmt ist, wobei (3) den ersten Winkel bedeutet.(Fig.1 bis 7, 10 bis 13)

5. Anordnung nach Anspruch 2 oder 3, dadurch gekennzeichnet, dass der zweite Winkel (4) 30 bis 60 Grad - vorzugsweise 45 Grad - beträgt. (Fig. 1-13)

6. Anordnung nach einem der vorhergehenden Ansprüche, dadurch gekennzeichnet, dass jeder Backen (7,18) eine Ausnehmung (9) für einen benachbarten Backen (7,18) aufweist. (Fig. 1-7, 10-13, 15-16)

7. Anordnung nach einem der vorhergehenden Ansprüche, dadurch gekennzeichnet, dass die Backen (7,18) durch eine rotierende Steuereinrichtung (12b) mit zweiarmigen Hebeln (31,32) über Keilflächen (27,28) angesteuert sind. (Fig.13,14).

8. Anordnung nach einem der Ansprüche 1 bis 5, dadurch gekennzeichnet, dass jeder Backen (7,18) in einer Schiene (10) geführt ist und über zumindest einen Führungszapfen (11) verfügt, der mit einer Steuereinrichtung (12a) zusammenwirkt, welche gegebenenfalls eine Scheibe (13) mit einer spiraligen Steuernut (14) od.dgl. für den Führungszapfen (11) aufweist. (Fig. 1,2).

9. Anordnung nach einem der vorhergehenden Ansprüche, dadurch gekennzeichnet, dass jeder Messerbacken (7) zumindest eine geschliffene Phase (8) aufweist, wobei die in gleiche Richtung weisenden Phasen (8) jedes Messerbackens (7) gleich ausgebildet sind, und wobei vorzugsweise eine von zwei Phasen (8) jedes Messerbackens (7) als Stützphase (8b) ausgebildet ist. (Fig. 6-7,11-13,15-17).

10. Anordnung nach einem der vorhergehenden Ansprüche, dadurch gekennzeichnet, dass die Berührungslinie (5) der Messerbacken (7) nach innen oder aussen gekrümmt ausgebildet ist, wobei vorzugsweise der Krümmungsradius RK der Schneide oder Schneidengegenseite nach der Formel RK = 2,2xRS bestimmt ist, in der RS den äussersten Schwenkradius, bzw. die Entfernung des äussersten Punktes des Backens von seiner Schwenkachse darstellt. (Fig. 8,9).

11. Anordnung nach einem der vorhergehenden Ansprüche, dadurch gekennzeichnet, dass wenigstens zwei Gruppen von in je einer Ebene liegenden Backen (7,18) - zu jeweils anderen Parallelen - gegebenenfalls in Axialrichtung der Gegenstände verschiebbar angeordnet - vorgesehen sind. (Fig. 11-14).

**Claims**

1. An arrangement of at least three holding, centring or knife jaws (7, 18), lying in a plane, for cutting and/or stripping apparatuses for rod-like or cable-like articles, characterised in that the jaws (7, 18) are displaceable or pivotable under positive control in such a way that a different point of each knife blade or a different line of each holding or centring surface is assigned to each diameter of an ariticle or can be brought into tangential contact with the article (22).

2.  An arrangement of at least three holding, centring or knife jaws (7, 18), lying in a plane, for cutting and/or stripping apparatus for rod-like or cable-like articles (22), which jaws (7, 18) are each displaceable in the direction of a first straight line (1), the position of the first straight line (1a-c) being defined by the direction of displacement, and which adjacent first straight lines (1) make a first angle (3) with one another, a line (5) which can be brought into tangential contact with the article (22) forming, when the jaw (7, 18) is viewed, that surface of the said jaw which can be turned to face the article (22) (holding or centring surface or knife blade), characterized in that the jaws (7, 18) each have recesses (9) for sliding along the contact line (5) of an adjacent jaw (7, 18).

3.  An arrangement of at least three holding, centring or knife jaws (7, 18), lying in a plane, for cutting and/or stripping apparatuses for rod-like or cable-like articles (22), characterised in that the jaws (7, 18) are each pivotable in the direction of the first straight line (1), the position of the first straight line (1) being defined by the position of a tangent (1m-p) on the outermost swivel radius (RS) of each jaw (7m-p), which outermost swivel radius (RS) is determined by the distance from a centre of rotation (29) to that point of each jaw (7m-p) which is farthest away from the said centre of rotation, and which adjacent first straight lines (1) make a first angle (3) with one another, the end points of a line (5) which, when the jaw is viewed, shows that surface of the said jaw which can be turned to face the article (22) defining a second straight line (2), and that each second straight line (2) forms a second angle (4) of less than 90 degrees with its associated first straight line (1), and that the line (5) can be brought into tangential contact with the article (22).

4.  An arrangement according to Claim 2 or 3, characterised in that the first angle (3) is determined by the formula 360:n, where n denotes the number of jaws (7 or 18), while a second angle (4) between the second straight line (2) and the associated first straight line is determined by the formula 90-(1/2) x (3), where (3) denotes the first angle. (Fig. 1 to 7, 10 to 13)

5.  An arrangement according to Claim 2 or 3, characterised in that the second angle (4) is 30 to 60 degrees - preferably 45 degrees. (Fig. 1-13)

6.  An arrangement according to any of the preceding Claims, characterized in that each jaw (7, 18) has a recess (9) for an adjacent jaw (7, 18). (Fig. 1-7, 10-13, 15-16)

7.  An arrangement according to any of the preceding Claims, characterised in that the jaws (7, 18) are controlled by a rotating control means (12b) having two-armed levers (31, 32), via wedge surfaces (27, 28). (Fig. 13, 14)

8.  An arrangement according to any of Claims 1 to 5, characterised in that each jaw (7, 18) is guided in a track (10) and has at least one guide pin (11) which interacts with a control means (12a) which may have a disc (13) possessing a spiral control groove (14) or the like for the guide pin (11). (Fig. 1, 2)

9.  An arrangement according to any of the preceding Claims, characterised in that each knife jaw (7) has at least one ground phase (8), those phases (8) of each knife jaw (7) which point in the same direction being similar, and one of two phases (8) of each knife jaw (7) preferably being in the form of a support phase (8b). (Fig. 6-7, 11-13, 15-17)

10. An arrangement according to any of the preceding Claims, characterised in that the contact line (5) of the knife jaws (7) curves inwards or outwards, the radius of curvature RK of the knife blade or opposite side of the knife blade preferably being determined by the formula RK = 2.2 x RS, in which RS represents the outermost swivel radius or the distance of the outermost point of the jaw from its pivot axle. (Fig. 8, 9)

11. An arrangement according to any of the preceding Claims, characterised in that at least two groups of jaws (7, 18), each of which lie in a plane and are parallel to the others and may be arranged so that they are displaceable in the axial direction of the articles, are provided. (Fig. 11-14)

**Revendications**

1.  Agencement d'au moins trois mâchoires de maintien, de centrage ou porte-lames (7,18), disposées dans un plan, pour des dispositifs de découpage et/ou d'enlèvement d'isolation pour des objets en forme de barres ou de câbles, caractérisé en ce que les mâchoires (7,18) sont susceptibles d'être déplacées ou pivotées, sous l'action d'une commande forcée, de telle façon qu'à chaque diamètre d'un objet soit associé un autre point de chaque tranchant, respectivement une autre ligne d'une face de maintien ou de centrage, respectivement qu'il lui soit possible de venir en appui tangentiel avec l'objet (22).

2. Agencement d'au moins trois mâchoires de maintien, de centrage ou porte-lames (7,18), disposées dans un plan, pour des dispositifs de découpage et/ou d'enlèvement d'isolation pour des objets (22) en forme de barres ou de câbles, les mâchoires (7,8) étant déplaçables chacune en direction d'une première droite (1), la position des premières droites (1a à c) étant chaque fois définie par la direction du déplacement, ces premières droites (1) voisines les unes des autres formant entre elles un premier angle (3), et où, en observant la mâchoire (7,18), la surface (face de maintien ou de centrage ou tranchant de découpage) de celle-ci qui est tournée vers l'objet (22) étant formée par une ligne (5) susceptible d'être placée en appui tangentiel sur l'objet (22), caractérisé en ce que les mâchoires (7,18) présentent chaque fois des évidements (9), pour permettre un coulissement le long de la ligne de contact (5) de chaque mâchoire (7,18) voisine.

3. Agencement d'au moins trois mâchoires de maintien, de centrage ou porte-lames (7,18), disposées dans un plan, pour des dispositifs de découpage et/ou d'enlèvement d'isolation pour des objets en forme de barres ou de câbles, caractérisé en ce que les mâchoires (7,18) sont pivotantes chacune en direction d'une première droite (1), où la position des premières droites (1) est définie par la position d'une tangente (1m-p) sur le rayon de pivotement (RS) le plus extérieur de chaque mâchoire (7m-p), ce rayon de pivotement (RS) la plus extérieur étant déterminé par la distance d'un centre de rotation (29) par rapport au point, qui en est le plus éloigné, de chaque mâchoire (7m-p), les premières droites (1) voisines les unes des autres formant entre elles un premier angle (3), et où les points d'extrémité, d'une ligne qui décrit la surface de la mâchoire qui est tournée vers l'objet (22) en observant la mâchoire, définissent une deuxième droite (2) et en ce que chaque deuxième droite (2) est située en faisant un deuxième angle (4), inférieur à 90 degrés, par rapport à la première droite (1) qui lui est associée, et en ce que la ligne (5) est susceptible d'être mise en appui tangentiel sur l'objet (22).

4. Agencement selon la revendication 2 ou 3, caractérisé en ce que le premier angle (3) est déterminé suivant la formule 360/n, où n est le nombre de mâchoires (7 ou 18), tandis qu'un deuxième angle (4) formé entre les deuxièmes droites (2) et la première droite chaque fois associée est déterminé suivant la formule 90-(1/2)x(3), où (3) est le premier angle. (figures 1 à 7, 10 à 13).

5. Agencement selon la revendication 2 ou 3, caractérisé en ce que le deuxième angle (4) est de 30 à 60 degrés - de préférence 45 degrés - (figures 1 à 13).

6. Agencement selon l'une des revendications précédentes, caractérisé en ce que chaque mâchoire (7,18) présente un évidement (8) pour une mâchoire voisine (7,18). (figures 1 à 7, 10 à 13, 15 et 16).

7. Agencement selon l'une des revendications précédentes, caractérisé en ce que les mâchoires (7,18) sont commandées au moyen d'un dispositif de commande (12b) à leviers à deux bras (31,32), par l'intermédiaire de surfaces de coins (27,28). (figures 13,14).

8. Agencement selon l'une des revendication 1 à 5, caractérisé en ce que chaque mâchoires (7,18) est guidée dans une glissière (10) et dispose d'au moins un tourillon de guidage (11) qui coopère avec un dispositif de commande (12a), qui présente, le cas échéant, un disque (13) avec une rainure de commande (14) spirale, ou analogue, pour le tourillon de guidage (11). (figures 1,2).

9. Agencement selon l'une des revendications précédentes, caractérisé en ce que chaque mâchoire porte lame (7) présente au mois une facette (8) affutée par rectification, les facettes orientées dans la même direction de chaque mâchoire porte-lame (7) étant de réalisation identique et où, de préférence, une facette (8) sur deux de la mâchoire porte-lame (7) est réalisée sous forme de facettes d'appui (8b). (figures 6 et 7, 11 à 13, 15 à 17).

10. Agencement selon l'une des revendications précédentes, caractérisé en ce que la ligne de contact (5) des mâchoires porte-lame (7) est incurvée vers l'intérieur ou l'extérieur, le rayon de courbure (RK) du tranchant ou de la contre-face du tranchant étant déterminé suivant la formule RK = 2,2 x RS, dans laquelle RS est le rayon de pivotement le plus extérieur, respectivement la distance entre le point le plus extérieur de la mâchoire et son axe de pivotement. (figures 8,9).

**11.** Agencement selon l'une des revendications précédentes, caractérisé en ce que sont prévus au moins deux groupes de mâchoires (7,18), situés chacun dans un plan et disposés chaque fois suivant d'autres parallèles, en étant déplaçables le cas échéant dans la direction axiale des objets (figures 11 à 14).

# Fig. 1

# Fig. 2

EP 0 297 484 B1

Fig. 3

Fig. 4

EP 0 297 484 B1

Fig. 7

Fig. 6

14

Fig. 9

Fig. 8

Fig. 5

Fig. 10

EP 0 297 484 B1

Fig. 12

Fig. 11

Fig. 13

Fig. 14

Fig. 15

Fig. 16

EP 0 297 484 B1

EP 0 297 484 B1

Fig. 17

Fig. 18